# EUROPÄISCHE PATENTSCHRIFT

(11) **EP 2 435 287 B1**
(45) Veröffentlichungstag und Bekanntmachung des Hinweises auf die Patenterteilung: **24.07.2013**
(21) Anmeldenummer: 10730054.3
(22) Anmeldetag: 20.05.2010
(51) Int. Cl.: B62D 33/06, B60G 99/00

(54) **WATTGESTÄNGE-AUFHÄNGUNGSEINRICHTUNG MIT INTEGRIERTER FEDERUNG/DÄMPFUNG**
WATT LINKAGE SUSPENSION DEVICE HAVING INTEGRATED COMPLIANCE AND DAMPING
DISPOSITIF DE SUSPENSION À TRINGLERIE DE WATT À RESSORT/AMORTISSEMENT INTÉGRÉ

(30) Priorität: 27.05.2009 DE 102009026503
(43) Veröffentlichungstag der Anmeldung: 04.04.2012
(73) Patentinhaber: ZF Friedrichshafen AG, 88038 Friedrichshafen (DE)
(72) Erfinder: EISMANN, Jens, 49326 Melle (DE); LANGHORST, Friedhelm, 49356 Diepholz (DE); LORENZ, Karl, 01968 Großkoschen (DE)
(86) Internationale Anmeldenummer: PCT/DE2010/050028
(87) Internationale Veröffentlichungsnummer: WO 2010/136028

(56) Entgegenhaltungen:
- EP-A1- 1 764 242
- EP-A2- 0 882 641

## Beschreibung

Die Erfindung betrifft eine Aufhängungseinrichtung zur federnden bzw. stoßdämpfenden Aufhängung eines Massekörpers relativ zu einem Unterbau, beispielsweise einer Lkw-Fahrerkabine relativ zu einem Fahrzeugchassis, gemäß dem Oberbegriff des Patentanspruchs 1.

Aufhängungseinrichtungen der eingangs genannten Art kommen beispielsweise, jedoch keineswegs ausschließlich, bei Lastkraftwagen, landwirtschaftlichen Fahrzeugen oder Schwerlastfahrzeugen zum Einsatz, um die jeweilige Fahrerkabine bezüglich Schwingungen und Bewegungen vom Fahrzeugchassis möglichst weitgehend zu entkoppeln.

Da bei Schwerlastfahrzeugen die Feder- bzw. Dämpferraten der Feder/Dämpfereinheiten des Fahrwerks aufgrund erheblicher Fahrzeuggewichte sowie aufgrund der hohen ungefederten Massen im Fahrwerk unvermeidlich hoch gewählt werden müssen, werden Fahrbahnunebenheiten oder auch Schwingungen aus Achsen und Antriebsstrang zunächst oft zu einem erheblichen Teil noch über die Achsfederung auf das Chassis und von dort auch auf die Fahrerkabine übertragen.

Um im Sinne der Ergonomie und des Arbeitsschutzes für den Fahrer die Übertragung derartiger Stöße und Vibrationen auf das Fahrerhaus und somit auf den Arbeitsplatz des Fahrers zu minimieren, sind Fahrerhausaufhängungen entwickelt worden, bei denen das Fahrerhaus bzw. die Fahrerkabine unter Verwendung eines eigenen Aufhängungssystems am Fahrzeugchassis abgestützt ist. Solche Aufhängungssysteme für die Fahrerkabine können dank der im Vergleich zum Fahrzeug viel geringeren Masse der Fahrerkabine mit niedrigeren Federraten als die Achsaufhängung ausgelegt werden, weshalb dann Fahrbahnunebenheiten bzw. aus Antriebsstrang oder Achsen des Fahrzeugs stammende Schwingungen dank solcher vergleichsweise weicher Kabinen-Aufhängungssysteme deutlich besser vom Arbeitsplatz des Fahrers isoliert werden können.

Um bei gattungsgemäßen elastischen Aufhängungsvorrichtungen beispielsweise für Fahrerkabinen unerwünschte seitliche Bewegungen oder auch Wanken der Kabine relativ zum Fahrzeugchassis einzuschränken - beispielsweise bei Schräg- oder Kurvenfahrt, aber z.B. auch im Fall einseitiger Fahrbahnunebenheiten - sind Aufhängungsvorrichtungen entwickelt worden, bei denen zwischen der Fahrerkabine und dem Chassis eine Feder/Dämpfer-Anordnung sowie eine Wattgestängeeinrichtung angeordnet ist. Je nach Ausführung sorgt die Wattgestängeeinrichtung dabei dafür, dass seitliche Bewegungen der Fahrzeugkabine gegenüber dem Chassis unterbunden werden, bzw. dafür, dass Einfederungsbewegungen der Kabine relativ zum Chassis im Wesentlichen linear erfolgen, dass also die Bewegungsfreiheitsgrade zwischen Kabine und Chassis mittels der Wattgestängeeinrichtung auf eine insbesondere vertikale Einfederungsbewegung reduziert werden.

Eine derartige Aufhängungsvorrichtung ist beispielsweise aus der DE 10 2005 043 998 A1 bekannt. Diese bekannte Aufhängungsvorrichtung umfasst je nach Ausführungsform eines oder mehrere Watt'sche Gestänge, die dafür sorgen, dass die Bewegungsfreiheitsgrade der Kabine gegenüber dem Chassis beispielsweise eines Lkw auf eine lediglich vertikale Bewegung reduziert werden, bzw. zusätzlich auch dafür, dass relative Wankbewegungen der Kabine gegenüber dem Chassis unterbunden werden. Gleichzeitig sind lineare Einfederungsbewegungen zwischen Kabine und Chassis entlang der Hochachse - innerhalb des Kabinen-Federwegs - weiterhin uneingeschränkt möglich.

Bei dieser bekannten Aufhängungsvorrichtung ist es jedoch nach wie vor erforderlich, dass im Bereich der Wattgestängeanordnung separat und zusätzlich Feder/Dämpferelemente zwischen der Kabine und dem Chassis angeordnet werden, da das bzw. die Wattgestänge der Wattgestängeanordnung gemäß der Lehre der genannten Druckschrift lediglich Führungsaufgaben bezüglich der vertikalen Einfederungsbewegung übernehmen können, während die eigentlichen vertikalen Haltekräfte bzw. die Dämpfungswirkung bei der Einfederungsbewegung von den separaten Feder/Dämpferelementen übernommen werden müssen. Zudem müssen die Feder/Dämpferelemente aus Gründen der Symmetrie und konstruktiven Anordnung im Allgemeinen zumindest in zweifacher Ausführung vorgesehen und im Bereich zweier Ecken der Kabine angeordnet werden.

Dies ist aufwändig und erfordert eine vergleichsweise hohe Zahl an Baugruppen bzw. Komponenten, was mit entsprechenden Kosten, mit entsprechendem Bauraumbedarf und mit entsprechenden Bauteilgewichten einhergeht. Auch sind die Feder/Dämpferelemente bei den bekannten Fahrerhausaufhängungen vergleichsweise exponiert angeordnet und müssen daher eigens gegen Beschädigungen bzw. Verschmutzungen im oft rauhen Alltagsbetrieb eines Lastkraftwagens geschützt werden.

Mit diesem Hintergrund ist es Aufgabe der vorliegenden Erfindung, eine Aufhängungseinrichtung zur federnden bzw. dämpfenden Aufhängung eines Massekörpers relativ zu einem Unterbau zu schaffen, insbesondere zur Aufhängung einer Fahrzeugkabine bei einem Lastkraftwagen, mit der sich die genannten Nachteile des Standes der Technik überwinden lassen. Insbesondere soll die Aufhängungseinrichtung dabei eine flexiblere Anordnung der Federungs- und/oder Dämpfungselemente der Aufhängungseinrichtung, bei gleichzeitiger Einsparung von konstruktivem Aufwand, Bauraum, Kosten und Anzahl von Bauelementen ermöglichen.

Diese Aufgabe wird durch eine Aufhängungseinrichtung mit den Merkmalen des Patentanspruchs 1 gelöst. Bevorzugte Ausführungsformen sind Gegenstand der Unteransprüche.

Die erfindungsgemäße Aufhängungseinrichtung dient in an sich bekannter Weise zunächst einmal der federnden Aufhängung eines Massekörpers relativ zu einem Unterbau, also beispielsweise der Aufhängung der Fahrerkabine eines Lastkraftwagens gegenüber dem Fahrzeugchassis.

In an sich ebenfalls bekannter Weise umfasst die Aufhängungseinrichtung eine Feder-/Dämpfer-Anordnung mit zumindest einem Dämpferelement und/oder zumindest einem Federelement zur Dämpfung von Stößen bzw. Schwingungen, sowie ferner eine Wattgestängeanordnung mit zumindest einem den Massekörper und den Unterbau relativbeweglich verbindenden Watt'schen Gestänge. Das zumindest eine Watt'sche Gestänge umfasst dabei einen - drehbar an einer Lageraufnahme des Massekörpers bzw. des Unterbaus gelagerten - Watt'schen Lenker, und dient der Reduktion der Bewegungsfreiheitsgrade des Massekörpers gegenüber dem Unterbau, beispielsweise der im Wesentlichen linearen Führung eines Fahrerhauses entlang der vertikalen Hauptstoßrichtung des Fahrwerks bzw. Chassis.

Erfindungsgemäß jedoch zeichnet sich die Aufhängungseinrichtung dadurch aus, dass das zumindest eine Federelement und oder das zumindest eine Dämpferelement der Feder/Dämpfer-Anordnung im Bereich eines Watt'schen Lenkers zwischen dem Watt'schen Lenker und der dem Watt'schen Lenker zugeordneten Lageraufnahme angeordnet ist.

Der Erfindung liegt dabei die Erkenntnis zugrunde, dass bei den Einfederungsbewegungen des Massekörpers (beispielsweise einer Fahrerkabine) relativ zum Unterbau (z.B. Chassis) eine Drehbewegung des Watt'schen Lenkers relativ zu der dem Watt'schen Lenker zugeordneten Lageraufnahme am Massekörper bzw. am Unterbau erfolgt. Daher wird es möglich, bei einer Aufhängungseinrichtung mit Wattgestängeanordnung die bisher stets separat zwischen Massekörper und Unterbau angeordnete Feder- und/oder Dämpferelemente direkt einem der Watt'schen Lenker der Wattgestängeanordnung zuzuordnen.

Hierdurch ergibt sich zunächst einmal der Vorteil, dass nicht mehr jeweils zwei Feder- bzw. Dämpferelemente (beispielsweise im Bereich der hinteren Ecken einer Fahrzeugkabine) vorgesehen werden müssen, sondern dass dank der Erfindung nun nur noch ein zentrales Feder- bzw. Dämpferelement im Bereich des jeweiligen Watt'schen Lenkers genügt, um die entsprechende Feder- bzw. Dämpfungswirkung auszuüben.

Dementsprechend vorteilhaft stellt sich dank der Erfindung die damit verringerte Anzahl an Einzelteilen bzw. Baugruppen, der verringerte Bauraumbedarf sowie die geringere Masse der Aufhängungseinrichtung dar, wodurch auch entsprechende Kostenreduzierungen erreicht werden können.

Die Erfindung lässt sich dabei zunächst einmal unabhängig davon verwirklichen, wie das zumindest eine Federelement und/oder das zumindest eine Dämpferelement der Feder/Dämpfer-Anordnung konstruktiv ausgebildet und an den zugehörigen Watt'schen Lenker angebunden ist, solange die bei Einfederungsbewegungen auftretende Rotation des Watt'schen Lenkers relativ zu der dem Watt'schen Lenker zugeordneten Lageraufnahme zu einer entsprechenden Auslenkung des dem Watt'schen Lenker zugeordneten Federelements und/oder Dämpferelements, und damit zu einer entsprechenden federnden bzw. dämpfenden Gegenkraft auf den Watt'schen Lenker führt.

Gemäß einer bevorzugten Ausführungsform der Erfindung ist das dem Watt'schen Lenker zugeordnete Federelement bzw. Dämpferelement jedoch als Rotationsdämpfer bzw. als Rotationsfeder ausgebildet. Die Ausbildung als Rotationsdämpfer bzw. Rotationsfeder besitzt insbesondere den Vorteil einer besonders platzsparenden und kompakten Ausführung der Aufhängungseinrichtung, da der Rotationsdämpfer bzw. die Rotationsfeder im Wesentlichen komplett in dem vom Watt'schen Lenker bei dessen Rotations- bzw. Schwenkbewegung überstrichenen Bereich angeordnet werden kann. Dementsprechend benötigt die Aufhängungseinrichtung gemäß dieser Ausführungsform der Erfindung besonders wenig Bauraum, welcher somit für andere Funktionen bzw. Baugruppen zur Verfügung steht.

Die Erfindung wird ferner auch unabhängig davon verwirklicht, ob im Bereich des bzw. der Watt'schen Lenker der Aufhängungseinrichtung ein Federelement, ein Dämpferelement, oder sowohl ein Federelement als auch ein Dämpferelement angeordnet ist.

Mit diesem Hintergrund ist gemäß einer bevorzugten Ausführungsform der Erfindung zunächst vorgesehen, dass die zumindest eine Dämpfereinrichtung der Feder/Dämpfer-Anordnung zwischen einem Watt'schen Lenker und der dem Watt'schen Lenker zugeordneten Lageraufnahme angeordnet ist, während die zumindest eine Federeinrichtung der Feder/Dämpfer-Anordnung unmittelbar zwischen dem Massekörper und dem Unterbau angeordnet ist.

Eine hierzu alternative Ausführungsform der Erfindung hingegen sieht vor, dass die zumindest eine Federeinrichtung der Feder/Dämpfer-Anordnung zwischen einem Watt'schen Lenker und der dem Watt'schen Lenker zugeordneten Lageraufnahme angeordnet ist, während die zumindest eine Dämpfereinrichtung der Feder/Dämpfer-Anordnung unmittelbar zwischen dem Massekörper und dem Unterbau angeordnet ist.

Diesen beiden Ausführungsformen der Erfindung ist der Vorteil gemeinsam, dass auf diese Weise Federung und Dämpfung des Massekörpers bzw. der Fahrerkabine separat und an verschiedenen Stellen realisiert bzw. angeordnet werden können. So kann z.B. entweder die Dämpfereinrichtung an einem Watt'schen Lenker der Aufhängungseinrichtung und die Federeinrichtung direkt zwischen Fahrerkabine und Unterbau angeordnet werden, oder es wird die Federung an dem Watt'schen Lenker angeordnet, während die Dämpfereinrichtung direkt zwischen Fahrerkabine und Unterbau positioniert wird. Diese beiden Ausführungsformen der Erfindung ermöglichen somit eine besonders flexible Platzierung der Federeinrichtung und der Dämpfereinrichtung, insbesondere bei der Anwendung für eine Aufhängungseinrichtung einer Fahrzeugkabine.

Eine weitere, besonders bevorzugte Ausführungsform der Erfindung sieht vor, dass die zumindest eine Federeinrichtung bzw. die zumindest eine Dämpfereinrichtung in einem der watt'schen Lenker angeordnet ist. Bei dieser Ausführungsform besitzt der jeweilige Watt'sche Lenker somit zusätzlich eine Gehäusefunktion, indem er die Federeinrichtung, beispielsweise eine Rotationsfeder und/oder die Dämpfereinrichtung, beispielsweise einen Rotationsdämpfer aufnimmt, beispielsweise in einer entsprechenden Ausnehmung des Watt'schen Lenkers.

Gemäß einer weiteren Ausführungsform der Erfindung ist vorgesehen, dass sowohl die zumindest eine Federeinrichtung als auch die zumindest eine Dämpfereinrichtung der Feder/Dämpfer-Anordnung zwischen einem Watt'schen Lenker und der dem Watt'schen Lenker zugeordneten Lageraufnahme angeordnet ist.

Vorzugsweise umfasst dabei die Wattgestängeanordnung zumindest zwei Watt'sche Gestänge, wobei die zumindest eine Federeinrichtung einem anderen Watt'schen Lenker der Wattgestängeanordnung zugeordnet ist als die zumindest eine Dämpfereinrichtung.

Gemäß einer weiteren bevorzugten Ausführungsform der Erfindung umfasst die Wattgestängeanordnung zwei Wattgestänge, deren Geradführungsrichtungen übereinstimmen, die voneinander entlang der gemeinsamen Geradführungsrichtung beabstandet angeordnet sind, und deren Bewegungsebenen parallel zueinander verlaufen.

Durch die Zuordnung der Federeinrichtung zu einem Wattgestänge und der Dämpfereinrichtung zu einem anderen Wattgestänge wird der zur Verfügung stehende Bauraum optimal ausgenutzt, und sowohl Dämpfereinrichtung als auch Federeinrichtung sind separat voneinander optimal zugänglich. Zudem kann bei dieser Ausführungsform die Unterbringung der Federeinrichtung wie auch der Dämpfereinrichtung jeweils auch wieder innerhalb des der Federeinrichtung bzw. der Dämpfereinrichtung jeweils zugeordneten Watt'schen Lenkers erfolgen, wobei die Watt'schen Lenker hierzu wieder gehäuseartig ausgebildet werden können.

Die zumindest zwei beabstandete Watt'sche Gestänge umfassende Ausführungsform der Erfindung besitzt grundsätzlich den Vorteil, dass sich zusätzlich zur Geradführung des Massekörpers bzw. der Fahrerkabine - die sich bereits mit einem einzigen Wattgestänge verwirklichen lässt - ohne weitere Hilfsmittel auch die Wankbewegungen des Massekörpers bzw. der Kabine gegenüber dem Chassis wirkungsvoll unterdrücken lassen. Dies hängt damit zusammen, dass beabstandet angeordnete Wattgestänge zwischen Unterbau und Massekörper nicht nur Querkräfte (wie ein einzelnes Wattgestänge), sondern aufgrund des als Hebelarm wirkenden Abstandes zwischen den Wattgestängen auch Drehmomente, insbesondere Wankmomente, übertragen bzw. ableiten können.

Mit diesem Hintergrund ist gemäß einer weiteren, besonders bevorzugten Ausführungsform der Erfindung ferner vorgesehen, dass die den Querschubstreben der beiden Watt'schen Gestängen zugeordneten äußeren Anlenkpunkte jeweils paarweise auf einer beiden Wattgestängen gemeinsamen Schwenkachse liegen.

Vorzugsweise sind die Querschubstreben unterschiedlicher Wattgestänge dabei paarweise zudem jeweils einstückig in Form einer insbesondere V-förmigen Kombinationsstrebe ausgebildet. Hierdurch teilen sich die äußeren Anlenkpunkte der Querschubstreben der beiden Wattgestänge insgesamt nur zwei Gelenkachsen, anstelle wie bei zwei separaten Watt'schen Gestängen vier Gelenkachsen zu beanspruchen.

Ferner bringt insbesondere die Ausführungsform, bei welcher die beiden gemeinsam angelenkten Querschubstreben zudem jeweils ein einem Dreieckslenker ähnelndes, V-förmiges Bauteil bilden, konstruktive Vereinfachungen mit sich, indem die Anzahl der notwendigen Bauteile, insbesondere die Anzahl der benötigten Gelenkverbindungen, reduziert wird, da nur noch zwei Schwenklager zur Anbindung der äußeren Anlenkpunkte aller vier Querschubstreben der beiden Watt'schen Gestänge benötigt werden. Auf diese Weise werden somit Bauelemente und damit Kosten eingespart. Ferner baut die Wattgestängeanordnung auf diese Weise kompakt und bauraumsparend, und es werden konstruktiv nur noch zwei statt vier rahmenseitige Anbindungspunkte benötigt.

Da sich die durch die beiden Watt'schen Lenker erzeugten, auf die rahmenseitigen Anbindungspunkte wirkenden Kräfte bei dieser Anordnung aufgrund vektorieller Addition zudem teilweise gegenseitig aufheben, können die rahmenseitigen Anbindungsteile leichter und somit kostengünstiger ausgelegt werden als bei zwei Wattgestängen mit separat angelenkten Querschubstreben. Ferner können - beim Einsatz von Elastomerlagern - reduzierte Steifigkeiten für die Elastomerlager verwendet werden, was bessere Körperschallisolation verspricht. Schließlich können auf diese Weise sämtliche Querschubstreben der beiden Wattgestänge problemlos auch in ein und derselben Bewegungsebene angeordnet werden, was nochmals Bauraum einspart.

Gemäß einer weiteren bevorzugten Ausführungsform der Erfindung ist ferner vorgesehen, dass zumindest einer der Anlenkpunkte des Wattgestänges relativbeweglich mit dem Massekörper bzw. dem Unterbau verbunden ist. Dabei ist die Relativposition zwischen dem Anlenkpunkt des Wattgestänges und dem Massekörper mittels zumindest eines im Wesentlichen linear wirkenden Aktuators veränderbar.

Diese Ausführungsform wird unabhängig davon verwirklicht, welcher Art der Aktuator ist und wie dieser konstruktiv ausgebildet ist, solange die für die Wankstabilisierung erforderlichen Kräfte von dem Aktuator aufgebracht werden können. So kann es sich bei dem Aktuator beispielsweise um einen passiven, semiaktiven oder aktiven Aktuator handeln. Dabei kann ein passiver Aktuator beispielsweise und in der einfachsten Form als Federelement umgesetzt werden, ein semiaktiver Aktuator kann beispielsweise durch einen hydraulischen Dämpfer oder durch eine Gasdruckfeder gebildet sein, und ein aktiver Aktuator beispielsweise in Form eines hydraulischen, pneumatischen oder elektrischen Linearaktuators vorliegen.

Insbesondere durch die mit einem aktiven Aktuator erreichbare aktive Veränderbarkeit der Relativposition zwischen dem zumindest einen Anlenkpunkt des Wattgestänges und dem Massekörper bzw. dem Unterbau wird es zusätzlich möglich, dass unerwünschtem Wanken des Massekörpers gegenüber dem Unterbau aktiv entgegengewirkt werden kann, indem der zumindest eine Anlenkpunkt des Wattgestänges (relativ zu seiner Verbindung mit dem Massekörper bzw. mit dem Unterbau) mittels des Aktuators verschoben wird.

Dies bedeutet mit anderen Worten, dass der Wankwinkel z.B. zwischen der Fahrerkabine und dem Chassis eines Lastkraftwagens auf diese Weise auch aktiv verändert werden kann, um somit - z.B. im Falle von seitlichen Chassisneigungen - die horizontale Positionierung der Fahrerkabine dennoch aufrechtzuerhalten, oder zumindest die seitliche Neigung der Fahrerkabine kleiner zu halten als diejenige des Chassis.

Diese Ausführungsform wird zunächst einmal unabhängig davon verwirklicht, wie der zumindest eine Aktuator konstruktiv ausgebildet und an das zumindest eine Watt'sche Gestänge angebunden ist, solange eine Längenveränderung des Aktuators zu einer entsprechenden Veränderung des Wankwinkels des Massekörpers bzw. der Kabine relativ zum Unterbau führt. So können auch beispielsweise zwei Aktuatoren vorgesehen sein, die im Wesentlichen parallel zur Geradführungsrichtung des bzw. der Wattgestänge angeordnet sind.

Gemäß einer weiteren bevorzugten Ausführungsform ist der Aktuator mittels eines Hebelarms an den Anlenkpunkt des Wattgestänges angebunden. Dabei verläuft die Wirkungsrichtung des Aktuators im Wesentlichen senkrecht zur Geradführungsrichtung des zumindest einen Wattgestänges.

Auf diese Weise kann - in Abhängigkeit von der Länge des Hebelarms - ein Drehmoment auf die Anlenkung des Wattgestänges, an welcher der Aktuator angreift, und somit auf den Massekörper bzw. auf die Kabine ausgeübt werden. Mittels dieses durch den Aktuator aufgebrachten Drehmoments kann unerwünschten Wankbewegungen der Kabine somit aktiv entgegengewirkt werden.

Diese Ausführungsform lässt sich beispielsweise auch dann zur Wankstabilisierung einsetzen, wenn die Wattgestängeanordnung der Aufhängungseinrichtung lediglich eines und nicht mehrere Watt'sche Gestänge umfasst. Hierbei dient das eine Wattgestänge dann insbesondere der Unterbindung von seitlichen (translatorischen) Bewegungen des Massekörpers bzw. der Kabine relativ zum Unterbau. Der über einen Hebelarm angebundene Aktuator kann in diesem Fall sowohl zur aktiven Wankstabilisierung als auch zu (annähernden) Parallelführung des Massekörpers bzw. der Kabine entlang der Bewegungsrichtung der federnden Aufhängung herangezogen werden.

Mittels der Anordnung der Wirkungsrichtung des Aktuators im Wesentlichen senkrecht zur Geradführungsrichtung der Wattgestängeanordnung ergibt sich ferner eine optimale Entkopplung zwischen der Geradführung des Wattgestänges - beispielsweise der senkrechten Führung eines Lkw-Fahrerhauses - einerseits und der Beeinflussung der Wankbewegungen des Fahrerhauses durch den in diesem Fall im Wesentlichen in horizontaler Richtung wirkenden Aktuator.

Gemäß einer hierzu alternativen Ausführungsform der Erfindung ist vorgesehen, dass der Anlenkpunkt des Aktuators an der Wattgestängeanordnung unmittelbar mit dem Drehpunkt eines der Watt'schen Lenker der Wattgestängeanordnung verbunden ist. Hierbei verläuft gleichzeitig die Wirkungsrichtung des zumindest einen Aktuators im Wesentlichen senkrecht zur Geradführungsrichtung der Wattgestängeanordnung.

Bei dieser Ausführungsform ergibt sich eine besonders platzsparende Anordnung und gleichzeitig eine gute Hebelwirkung des Aktuators, sowie damit verbundene vergleichsweise niedrige Kräfte und eine entsprechend kleine Dimensionierbarkeit bezüglich des Aktuators. Dies hängt mit dem u.U. erheblichen Abstand zwischen den beiden Watt'schen Lenkern der Wattgestängeanordnung zusammen, welcher bei dieser Ausführungsform den Hebelarm für das durch den Aktuator erzeugte Drehmoment bildet, als Gegenpol zu einem externen Wankmoment auf den Massekörper bzw. Fahrerkabine.

Im Folgenden wird die Erfindung anhand lediglich Ausführungsbeispiele darstellender Zeichnungen näher erläutert. Dabei zeigt:
- **Fig. 1**: in schematischer Darstellung eine Ausführungsform einer Aufhängungsanordnung gemäß der vorliegenden Erfindung mit Wattgestängeanordnung und Dämpferelement an einem ersten Watt'schen Lenker;
- **Fig. 2**: in einer **Fig. 1** entsprechenden Darstellung und Ansicht eine Ausführungsform einer erfindungsgemäßen Aufhängungseinrichtung mit Dämpferelement an einem zweiten Watt'schen Lenker;
- **Fig. 3**: in einer **Fig. 1** und **2** entsprechenden Darstellung und Ansicht eine Ausführungsform einer erfindungsgemäßen Aufhängungseinrichtung mit Dämpferelement und Aktuator;
- **Fig. 4**: in einer **Fig. 1** bis **3** entsprechenden Darstellung und Ansicht eine Ausführungsform einer erfindungsgemäßen Aufhängungseinrichtung mit Federelement und Dämpferelement an demselben Watt'schen Lenker;
- **Fig. 5**: in einer **Fig. 1** bis **4** entsprechenden Darstellung und Ansicht eine Ausführungsform einer erfindungsgemäßen Aufhängungseinrichtung mit Federelement und Dämpferelement an unterschiedlichen Watt'schen Lenkern;
- **Fig. 6**: in einer **Fig. 1** bis **5** entsprechenden Darstellung und Ansicht ebenfalls eine Ausführungsform einer erfindungsgemäßen Aufhängungseinrichtung mit Federelement und Dämpferelement an unterschiedlichen Watt'schen Lenkern; und
- **Fig. 7**: in einer **Fig. 1** bis **6** entsprechenden Darstellung und Ansicht eine weitere Ausführungsform einer erfindungsgemäßen Aufhängungseinrichtung mit Federelement und Dämpferelement an demselben Watt'schen Lenker.

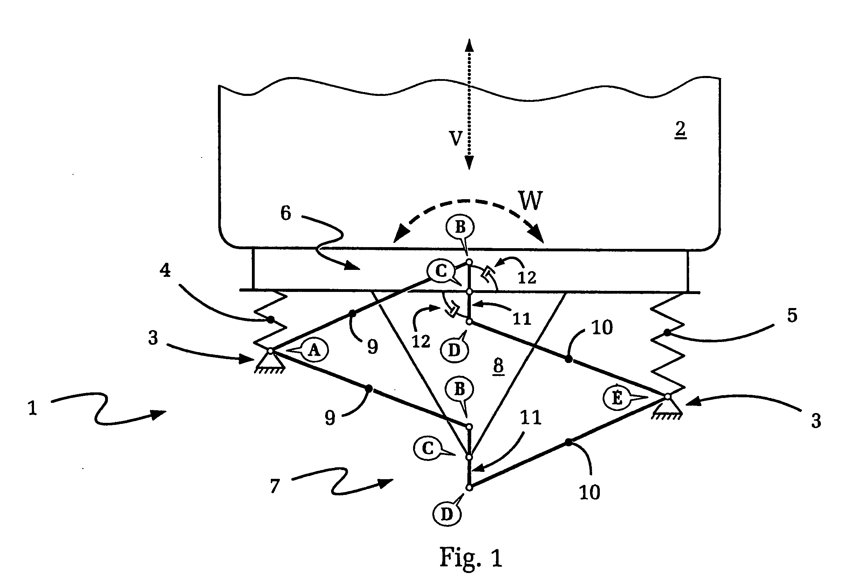

**Fig. 1** zeigt in höchst schematischer Darstellung eine Ausführungsform einer Aufhängungseinrichtung 1 gemäß der vorliegenden Erfindung. Die dargestellte Aufhängungseinrichtung 1 dient der federnden und dämpfenden Aufhängung eines Lkw-Fahrerhauses 2 (insbesondere im Bereich des hinteren Endes des Fahrerhauses) gegenüber dem in **Fig. 1** schematisch in Form von Aufhängungspunkten angedeuteten Fahrgestell 3 des Lastkraftwagens. Zur federnden Aufhängung des Fahrerhauses 2 gegenüber dem Chassis 3 sind zwischen Chassis 3 und Fahrerhaus 2 beim dargestellten Ausführungsbeispiel zwei Federelemente 4, 5 angeordnet.

Man erkennt in **Fig. 1** ferner, dass die zwischen Fahrerhaus 2 und Chassis 3 angeordnete Aufhängungseinrichtung 1 außer den Federelementen 4, 5 eine Wattgestängeanordnung mit zwei Wattgestängen 6, 7 umfasst. Erkennbar wird, dass jedes der Wattgestänge 6, 7 fünf Gelenke umfasst, die in **Fig. 1** mit den Buchstaben A, B, C, D, E bezeichnet sind. Von den Gelenken A bis E sind bei der dargestellten Ausführungsform A und E jeweils chassisfest gelagert (gelenkig mit dem Chassis 3 verbunden), wohingegen C jeweils fahrerhausfest gelagert ist (gelenkig mit dem Fahrerhaus 2 verbunden). Die gelenkige Verbindung des Drehpunkts C des oberen Wattgestänges 6 ist dabei direkt am Fahrerhaus 2 angeordnet, während die gelenkige Verbindung des Drehpunkts C des unteren Wattgestänges 7 mittels eines starren Auslegers 8 mit dem Fahrerhaus 2 verbunden ist. Die Gelenkpunkte A bis E jedes der beiden Wattgestänge 6, 7 sind dabei jeweils durch eine Anordnung aus zwei Querschubstreben 9, 10 und einem zentralen Watt'schen Lenker 11 untereinander verbunden.

Man erkennt ferner in **Fig. 1****,** dass die beiden Watt'schen Gestänge 6, 7 vertikal übereinander angeordnet sind. Dabei sind die den Querschubstreben 9, 10 der beiden Wattgestänge 6, 7 jeweils zugeordneten äußeren Anlenkpunkte A, E paarweise mittels einer beiden Wattgestängen jeweils gemeinsamen Schwenkachse bei A bzw. E schwenkbar mit dem Chassis 3 verbunden.

Diese Ausführungsform, bei der die Querschubstreben 9, 10 der beiden Wattgestänge 6, 7 somit paarweise auf gemeinsamen Schwenkachsen bei A, E am Chassis angelenkt sind, bringt gegenüber einer Aufhängungseinrichtung mit zwei separaten Wattgestängen - aufgrund des Wegfalls zweier der sonst zusätzlich erforderlichen Lagerpunkte für die Querschubstreben 9, 10 - konstruktive Vereinfachungen mit sich, da nur noch zwei Schwenklager zur Anbindung der äußeren Anlenkpunkte aller vier Querschubstreben 9, 10 der beiden Watt'schen Gestänge 6, 7 benötigt werden. Auf diese Weise werden somit Bauelemente und damit Kosten eingespart. Ferner baut die Wattgestängeanordnung 1 auf diese Weise kompakt und bauraumsparend, und es werden konstruktiv nur noch zwei statt vier chassisseitige Anbindungen benötigt.

Da sich die durch die beiden Wattgestänge 6, 7 erzeugten, auf die rahmenseitigen Anbindungspunkte bei A, E wirkenden Kräfte bei dieser Anordnung aufgrund vektorieller Addition zudem teilweise gegenseitig aufheben, können die chassisseitigen Anbindungen leichter und somit kostengünstiger ausgelegt werden als bei zwei Wattgestängen mit jeweils separat angelenkten Querschubstreben 9, 10. Ferner können - beim Einsatz von Elastomerlagern für die chassisseitige Anbindung - reduzierte Steifigkeiten für die Elastomerlager verwendet werden, was zu einer besseren Körperschallisolation führt.

Aufgrund der besonderen - für sich genommen bekannten - Kinematik der Wattgestänge 6 bzw. 7 gemäß **Fig. 1** werden dabei nun zunächst seitliche Querbewegungen des Fahrerhauses 2 relativ zum Chassis 3 jeweils über die Gelenke A, C und E der beiden Wattgestänge 6, 7 abgestützt, während die Wattgestänge 6, 7 Relativbewegungen v von Fahrerhaus 2 und Chassis 3 entlang der Vertikalen ungehindert zulassen.

Dies hängt damit zusammen, dass der mittlere Drehpunkt C des jeweiligen Watt'schen Lenkers 11 aufgrund seiner Zwangsführung durch die beiden ihm zugeordneten Querschubstreben 9, 10 (die hierzu die gleiche Länge aufweisen müssen, und deren äußere Anlenkpunkte A und E einen vertikalen Abstand aufweisen müssen, der der Länge des Watt'schen Lenkers 11 entspricht) seine vertikale Bewegungsbahn nicht verlassen kann. Hierdurch werden Fahrerhaus 1 und Chassis 3 somit zunächst einmal stets in der dargestellten, übereinander vertikal zentrierten Lage gehalten. Eine relative Querbewegung des Fahrerhauses 2 relativ zum Chassis 3 findet somit dank der beiden Wattgestänge 6, 7 nicht statt, so dass - jedenfalls im Bereich der Wattgestänge 6 bzw. 7, bei der vorliegenden Ausführungsform also beispielsweise im hinteren Bereich des Fahrerhauses 3 - keine weitere seitliche Führung oder Abstützung des Fahrerhauses 1 erforderlich ist. Die Vertikalbewegung zwischen Fahrerhaus 2 und Chassis 3 bleibt somit aufgrund der freien vertikalen Beweglichkeit der jeweiligen Watt'schen Lenker 9 vollständig unbehindert, und wird zunächst lediglich durch die beiden Federeinrichtungen 4, 5 aufgenommen bzw. abgefangen.

Da die mittleren Drehpunkte C der beiden Watt'schen Lenker 11 entlang der Vertikalen zwangsgeführt werden, erfolgt zudem auch eine Stabilisierung des Fahrerhauses 2 gegenüber Rotationsbewegungen - sprich gegenüber etwaigen Wankbewegungen W gemäß **Fig. 1****.**

Dies bedeutet mit anderen Worten, dass das Fahrerhaus 3 bei den in den Figuren dargestellten Ausführungsbeispielen lediglich noch die (erwünschten) vertikalen Ausgleichsbewegungen V relativ zum Chassis 1 ausführen kann, dass jedoch seitliche Relativbewegungen bzw. Rotationen W des Fahrerhauses 2 gegenüber dem Chassis 3 dank der Wattgestängeanordnung 6, 7 unterbunden werden.

Im Unterschied zum Stand der Technik ist bei der Aufhängungseinrichtung 1 gemäß **Fig. 1** die Dämpfereinrichtung jedoch nicht zusammen mit den Federeinrichtungen 4, 5 im Bereich der Seiten bzw. Ecken der Fahrerkabine 2 angeordnet. Vielmehr ist die Dämpfereinrichtung bei der Aufhängungseinrichtung 1 gemäß **Fig. 1** unmittelbar zwischen dem Watt'schen Lenker 11 des oberen Wattgestänges 6 und der Fahrzeugkabine 2 in Form hier zweier schematisch angedeuteter Dämpferelemente 12 angeordnet.

Da bei vertikalen Einfederungsbewegungen V eine Rotation der beiden Watt'schen Lenker 11 um deren jeweilige Anbindungspunkte C an der Fahrzeugkabine 2 bzw. am Ausleger 8 erfolgt, führen derartige Einfederungsbewegungen V somit auch zu einer entsprechenden Auslenkung der beiden Dämpferelemente 12. Auf diese Weise kann mittels der unmittelbar am Watt'schen Lenker 11 angeordneten Dämpferelemente 12 somit ebensogut die Dämpfung der Vertikalbewegungen V der Fahrerkabine 2 erfolgen wie mit den Feder/Dämpferelementen aus dem Stand der Technik, die im Bereich der Seiten bzw. Ecken der Fahrerkabine 2 bei 3, 4 angeordnet sind.

Im Vergleich zum Stand der Technik wird durch die erfindungsgemäße Anordnung der Dämpferelemente 12 unmittelbar im Bereich des Watt'schen Lenkers 11 Bauraum eingespart, insbesondere dann, wenn es sich um Rotationsdämpfer handelt, wie dies gemäß einer Ausführungsform der Erfindung vorgesehen ist.

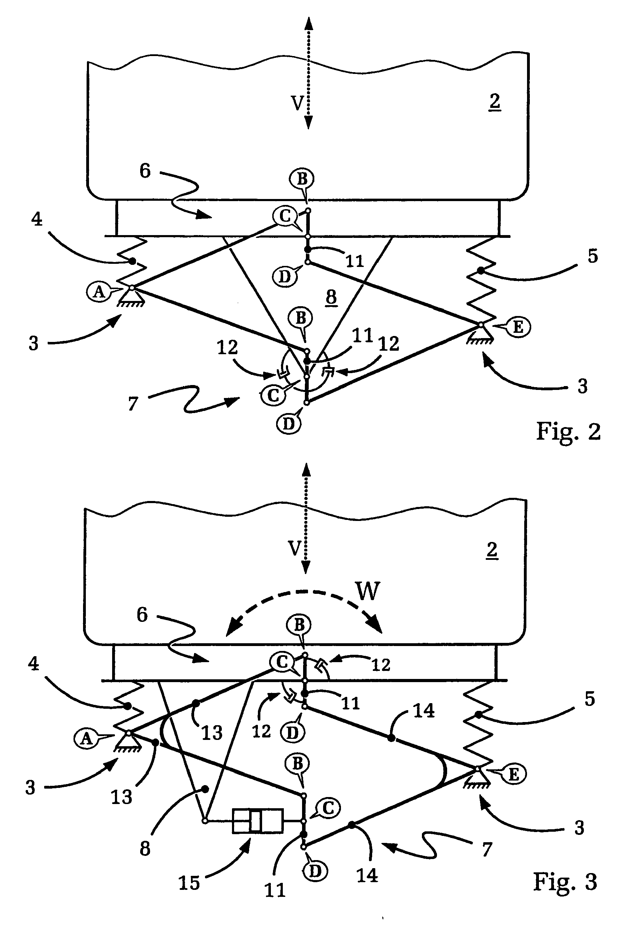

Eine weitere Ausführungsform einer erfindungsgemäßen Aufhängungseinrichtung ist in **Fig. 2** dargestellt. Die Ausführungsform gemäß **Fig. 2** unterscheidet sich von der Ausführungsform gemäß **Fig. 1** dadurch, dass die Dämpfereinrichtung bzw. der Rotationsdämpfer 12 bei der Ausführungsform gemäß **Fig. 2** nicht am Watt'schen Lenker 11 des oberen Wattgestänges 6, sondern am Watt'schen Lenker 11 des unteren Wattgestänges 7 angeordnet ist. Da beide Watt'sche Lenker 11 bei vertikalen Einfederungsbewegungen V der Fahrerkabine 2 jeweils um den gleichen Winkelbetrag rotieren bzw. verschwenkt werden, führt die Anordnung des Rotationsdämpfers 12 am Watt'schen Lenker 11 des unteren Wattgestänges 7 zu demselben Dämpfungseffekt wie die Anordnung des Rotationsdämpfers 12 am Watt'schen Lenker 11 des oberen Wattgestänges 6 gemäß **Fig. 1****.** Es bleibt somit den sonstigen konstruktiven Gegebenheiten überlassen, ob der Rotationsdämpfer 12 am Watt'schen Lenker 11 des oberen Wattgestänges 6 (vgl. **Fig. 1****)** oder am Watt'schen Lenker 11 des unteren Wattgestänges 7 (vgl. **Fig. 2****)** angeordnet wird.

Die Ausführungsform gemäß **Fig. 3** entspricht zunächst einmal wieder der Ausführungsform gemäß **Fig. 1****,** insbesondere was die Anordnung des Rotationsdämpfers 12 am Watt'schen Lenker 11 des oberen Wattgestänges 6 angeht.

Die Ausführungsform gemäß **Fig. 3** unterscheidet sich von der Ausführungsform gemäß **Fig. 1** jedoch weiterhin insofern, als bei der Ausführungsform gemäß **Fig. 3** jeweils die beiden zuvor gemäß **Fig. 1** und **Fig. 2** zwar an einer gemeinsamen Schwenkachse bei A bzw. bei E angelenkten, aber dennoch separaten Querschubstreben 9, 10 der beiden Wattgestänge 6, 7 nunmehr paarweise einstückig in Form jeweils einer Kombinationsstrebe 13 bzw. 14 ausgebildet sind.

Diese Ausführungsform, bei der die zuvor bereits gemeinsam angelenkten Querschubstreben 9, 10 (vgl. **Fig. 1****)** somit jeweils ein hier einem Dreieckslenker 13, 14 ähnelndes, V-förmiges Bauteil bilden, bringt weitere konstruktive Vereinfachungen sowie zusätzliche Vorteile mit sich. Zunächst einmal wird so die Anzahl der erforderlichen Bauteile weiter reduziert. Insbesondere werden dabei auch nicht mehr vier äußere Schwenklager für die vier Querschubstreben 9, 10 der beiden Wattgestänge 6, 7, sondern nur noch zwei Lager zur Anbindung der äußeren Anlenkpunkte A, E der beiden V-förmigen Kombinationsstreben 13, 14 benötigt. Ferner können die beiden auf diese Weise somit vereinten Wattgestänge 6, 7 im Wesentlichen in ein und derselben räumlichen Ebene (hier parallel zur Zeichenebene) angeordnet werden, was nochmals Bauraum einspart und für erhöhte Steifigkeiten sorgt. Schließlich heben sich auf diese Weise auch die innerhalb der Wattgestängeanordnung herrschenden Zug- bzw. Druckkräfte teilweise gegenseitig auf, ohne dass diese Kräfte erst den Umweg über die (ggf. elastische) Anbindung an Chassis bzw. Fahrerkabine gehen müssten.

Die bei dieser Ausführungsform bei Einfederungsbewegungen auftretenden, geringfügigen kinematischen Verspannungen in den nun einstückigen, V-förmigen Kombinationsstreben 13, 14 werden durch geringfügige elastische Verformungen der Kombinationsstreben 13, 14 beim Einfedern problemlos aufgefangen.

Ein weiterer Unterschied der Ausführungsform gemäß **Fig. 3** zu der Ausführungsform gemäß **Fig. 1** besteht ferner darin, dass der Drehpunkt C des Watt'schen Lenkers 11 des unteren Wattgestänges 7 bei der Ausführungsform gemäß **Fig. 3** nicht direkt an dem Ausleger 8 angeordnet ist (vgl. **Fig. 1****),** sondern dass bei der Ausführungsform gemäß **Fig. 3** zwischen dem Ausleger 8 und dem Drehpunkt C des Watt'schen Lenkers 11 des unteren Wattgestänges 7 ein Aktuator 15 angeordnet ist. Der Aktuator 15, bei dem es sich beispielsweise um einen hydraulischen Linearaktuator handeln kann, dient bei der Ausführungsform gemäß **Fig. 3** dazu, den Drehpunkt C des Watt'schen Lenkers 11 des unteren Wattgestänges 7 aktiv horizontal zu verschieben, um auf diese Weise eine aktive Kontrolle der Wankbewegungen W der Fahrerkabine 2 gegenüber dem Chassis 3 ausüben zu können.

Durch die bei dieser Ausführungsform somit gegebene horizontale Veränderbarkeit der Relativposition zwischen dem Drehpunkt C des unteren Watt'schen Lenkers 11 und dem Ausleger 8 der Fahrerkabine 2 wird demnach ermöglicht, dass unerwünschtem Wanken W der Fahrerkabine 2 gegenüber dem Chassis 3 aktiv entgegengewirkt werden kann, indem Drehpunkt C des unteren Watt'schen Lenkers 11 mittels des Aktuators horizontal verschoben wird.

Ebenso kann der Wankwinkel W zwischen dem Massekörper und dem Unterbau, also beispielsweise zwischen der Fahrerkabine und dem Chassis eines Lastkraftwagens, auf diese Weise aktiv verändert werden, um somit im Falle von seitlichen Chassisneigungen (beispielsweise bei Kurvenfahrt, Schrägfahrt, oder auch beim Parken auf unebenen Gelände) dennoch die horizontale Positionierung der Fahrerkabine aufrechtzuerhalten, oder zumindest die seitliche Neigung der Fahrerkabine kleiner zu halten als diejenige des Chassis.

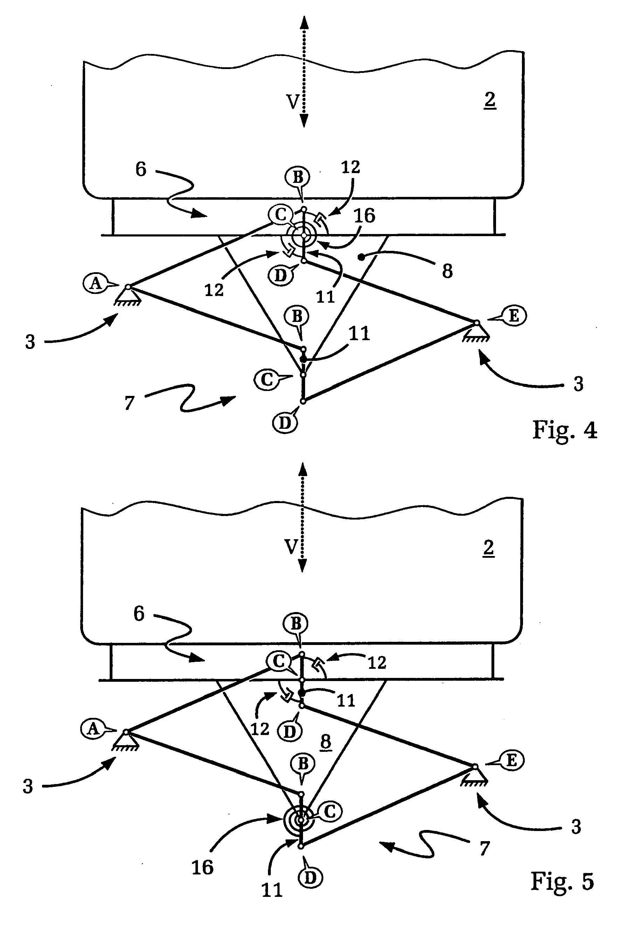

In den **Fig. 4** bis **7** sind weitere Ausführungsbeispiele für Aufhängungseinrichtungen gemäß der vorliegenden Erfindung dargestellt. Man erkennt in den **Fig. 4** bis **7** zunächst einmal, dass - im Unterschied zu den Ausführungsbeispielen gemäß **Fig. 1** bis 3 - bei den Ausführungsbeispielen gemäß **Fig. 4** bis **7** keine Federelemente 4, 5 mehr an den Seiten bzw. Ecken der Fahrerkabine 2 angeordnet sind. Die Funktion der Federelemente 4, 5 gemäß der Ausführungsbeispiele in den **Fig. 1** bis **3** übernimmt bei den Ausführungsbeispielen gemäß der **Fig. 4** bis **7** stattdessen eine Rotationsfeder bzw. Spiralfeder 16.

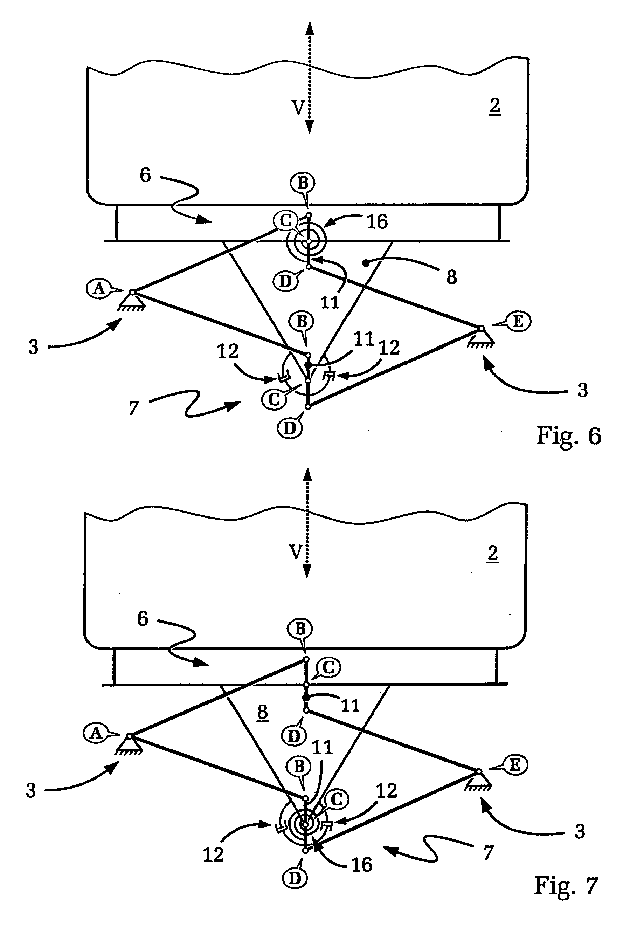

Anhand eines Vergleichs der **Fig. 4** bis **7** wird erkennbar, dass die Rotationsfeder 16 entweder im unmittelbaren Bereich des Watt'schen Lenkers 11 des oberen Wattgestänges 6, oder aber im unmittelbaren Bereich des Watt'schen Lenkers 11 des unteren Wattgestänges 7 angeordnet werden kann. In allen Fällen wirkt die Rotationsfeder 16 jedoch unmittelbar zwischen dem jeweiligen Watt'schen Lenker 11 und dessen Anbindung über den Drehpunkt C am Fahrerhaus 2, entweder direkt am Fahrerhaus 2 **(****Fig. 4** und **6****),** oder an dem mit dem Fahrerhaus 2 verbundenen Ausleger 8 **(****Fig. 5** und **7****).**

Da bei vertikalen Einfederungsbewegungen V eine Rotation bzw. Schwenkbewegung der beiden Watt'schen Lenker 11 um deren jeweilige Anbindungspunkte C an der Fahrzeugkabine 2 bzw. am Ausleger 8 erfolgt, führen die Einfederungsbewegungen V somit auch zu einer entsprechenden rotatorischen Auslenkung der Spiralfeder bzw. Rotationsfeder 16. Auf diese Weise kann mittels der nun unmittelbar im Bereich des jeweiligen Watt'schen Lenkers 11 angeordneten Rotationsfeder 16 somit ebensogut die Abfederung der Vertikalbewegungen V der Fahrerkabine 2 erfolgen wie mit den Federelementen 3, 4 aus dem Stand der Technik, die im Bereich der Seiten bzw. Ecken der Fahrerkabine 2 angeordnet sind (vgl. **Fig. 1** bis **3****).**

Im Vergleich zu diesem Stand der Technik wird somit durch die erfindungsgemäße Anordnung auch der Rotationsfeder 16 unmittelbar im Bereich des Watt'schen Lenkers 11 nochmals Bauraum in erheblichem Maße eingespart. Dies gilt insbesondere dann, wenn sowohl Federelemente als auch Dämpferelemente in Form von Rotationsfedern 16 bzw. Rotationsdämpfern 12 ausgebildet und an den Watt'schen Lenkern 11 angeordnet sind. Die **Fig. 4** bis **7** zeigen dabei unterschiedliche mögliche Anordnungen für die Rotationsfedern 16 und Rotationsdämpfer 12. Man erkennt, dass die Anordnung sowohl der Rotationsfeder 16 als auch des Rotationsdämpfers 12 weitgehend frei entweder am Drehpunkt C des Watt'schen Lenkers 11 des oberen Wattgestänges 6, oder aber am Drehpunkt C des Watt'schen Lenkers 11 des unteren Wattgestänges 6 erfolgen kann.

Ebensogut möglich (in den Ausführungsbeispielen jedoch nicht eigens dargestellt) ist es, eine Rotationsfeder 16 und/oder einen Rotationsdämpfer 12 sowohl am Drehpunkt C des Watt'schen Lenkers 11 des oberen Wattgestänges 6 als auch am Drehpunkt C des Watt'schen Lenkers 11 des unteren Wattgestänges 6 anzuordnen. Auf diese Weise lassen sich insbesondere höhere Feder- bzw. Dämpferraten und/oder noch kleinere Abmessungen für die Rotationsfedern 16 bzw. die Rotationsdämpfer 12 erzielen. Letzteres kann insbesondere dann von Bedeutung sein, wenn die Rotationsfedern 16 bzw. Rotationsdämpfer 12 in die Watt'schen Lenker 11 selbst integriert werden sollen, wenn die Watt'schen Lenker 11 somit gleichzeitig als Gehäuse zur Aufnahme der Rotationsfedern 16 bzw. Rotationsdämpfer 12 ausgebildet werden sollen.

Im Ergebnis wird deutlich, dass dank der Erfindung eine Aufhängungseinrichtung zur federnden und/oder dämpfenden Aufhängung eines Massekörpers, beispielsweise einer Lkw-Fahrerkabine, geschaffen wird, mit der sich die Möglichkeit zur besonders flexiblen Anordnung der Feder- und/oder Dämpferelemente ergibt. Die erfindungsgemäße Anordnung der Feder- und/oder Dämpferelemente am Watt'schen Lenker lässt sich dabei mit praktisch allen bekannten Ausführungsformen von Aufhängungseinrichtungen mit Wattgestängen kombinieren - auch mit aktiven, aktuatorisch gesteuerten Wattgestänge-Aufhängungseinrichtungen - und bringt grundsätzlich die Einsparung von konstruktivem Aufwand, Bauraum, Anzahl an Bauelementen und damit auch von Kosten mit sich.

Die Erfindung eröffnet damit erhebliche Vereinfachungspotenziale und Entwicklungsmöglichkeiten für gattungsgemäße Aufhängungseinrichtungen, insbesondere in Bezug auf den Einsatz im Bereich der Lkw-Fahrerkabinensysteme.

**Bezugszeichenliste**

| | |
|---|---|
| 1 | Aufhängungseinrichtung |
| 2 | Massekörper, Fahrerkabine |
| 3 | Unterbau, Chassis |
| 4, 5 | Federelement |
| 6, 7 | Wattgestänge |
| 8 | Hebelarm, Ausleger |
| 9, 10 | Wattgestänge-Querschubstrebe |
| 11 | Watt'scher Lenker |
| 12 | Dämpferelement, Rotationsdämpfer |
| 13, 14 | Kombinationsstrebe, Dreieckslenker |
| 15 | Aktuator |
| 16 | Rotationsfeder |
| A, B, C, D, E | Wattgestänge-Gelenkpunkte |

## Patentansprüche

1. Aufhängungseinrichtung (1) zur federnden/dämpfenden Aufhängung eines Massekörpers (2), insbesondere einer Fahrerkabine (2) eines Lastkraftwagens, relativ zu einem Unterbau (3), insbesondere relativ zu einem Fahrzeugchassis, die Aufhängungseinrichtung (1) aufweisend eine Feder/Dämpfer-Anordnung mit zumindest einem Dämpferelement und/oder zumindest einem Federelement zur Dämpfung von Stößen bzw. Schwingungen, sowie eine Wattgestängeanordnung (6, 7) mit zumindest einem den Massekörper (2) und den Unterbau (3) mittels eines Watt'schen Lenkers (11) relativbeweglich verbindenden Wattgestänge (ABCDE) zur Reduktion der Bewegungsfreiheitsgrade des Massekörpers (2) gegenüber dem Unterbau (3), wobei der Watt'sche Lenker (11) des zumindest einen Wattgestänges (ABCDE) drehbar an einer Lageraufnahme (C) des Massekörpers (2) bzw. des Unterbaus (3) gelagert ist,
**dadurch gekennzeichnet,**
**dass** das zumindest eine Federelement (16) und/oder das zumindest eine Dämpferelement (12) der Feder/Dämpfer-Anordnung im Bereich eines Watt'schen Lenkers (11) zwischen dem Watt'schen Lenker (11) und der dem Watt'schen Lenker (11) zugeordneten Lageraufnahme (C) angeordnet ist.

2. Aufhängungseinrichtung nach Anspruch 1,
**dadurch gekennzeichnet,**
**dass** das Federelement und/oder das Dämpferelement als Rotationsdämpfer (12) und/oder als Rotationsfeder (16) ausgebildet sind.

3. Aufhängungseinrichtung nach Anspruch 1 oder 2,
**dadurch gekennzeichnet,**
**dass** die zumindest eine Dämpfereinrichtung (12) der Feder/Dämpfer-Anordnung zwischen einem Watt'schen Lenker (11) und der dem Watt'schen Lenker (11) zugeordneten Lageraufnahme (C) angeordnet ist, während die zumindest eine Federeinrichtung (4, 5) der Feder/Dämpfer-Anordnung unmittelbar zwischen dem Massekörper (2) und dem Unterbau (3) angeordnet ist.

4. Aufhängungseinrichtung nach Anspruch 1 oder 2,
**dadurch gekennzeichnet,**
**dass** die zumindest eine Federeinrichtung (16) der Feder/Dämpfer-Anordnung zwischen einem Watt'schen Lenker (11) und der dem Watt'schen Lenker (11) zugeordneten Lageraufnahme (C) angeordnet ist, während die zumindest eine Dämpfereinrichtung der Feder/Dämpfer-Anordnung unmittelbar zwischen dem Massekörper (2) und dem Unterbau (3) angeordnet ist.

5. Aufhängungseinrichtung nach einem der Ansprüche 1 bis 4,
**dadurch gekennzeichnet,**
**dass** die zumindest eine Federeinrichtung (16) und/oder die zumindest eine Dämpfereinrichtung (12) in einem Watt'schen Lenker angeordnet ist.

6. Aufhängungseinrichtung nach einem der Ansprüche 1 bis 5,
**dadurch gekennzeichnet,**
**dass** sowohl die zumindest eine Federeinrichtung (16) als auch die zumindest eine Dämpfereinrichtung (12) der Feder/Dämpfer-Anordnung zwischen einem Watt'schen Lenker (11) und der dem Watt'schen Lenker (11) zugeordneten Lageraufnahme (C) angeordnet ist.

7. Aufhängungseinrichtung nach einem der Ansprüche 1 bis 6,
**dadurch gekennzeichnet,**
**dass** die Wattgestängeanordnung zumindest zwei Wattgestänge (ABCDE) umfasst, wobei die zumindest eine Federeinrichtung (16) einem anderen Watt'schen Lenker (11) der Wattgestängeanordnung als die zumindest eine Dämpfereinrichtung (12) zugeordnet ist.

8. Aufhängungseinrichtung nach einem der Ansprüche 1 bis 7,
**dadurch gekennzeichnet,**
**dass** die Wattgestängeanordnung zwei Wattgestänge (ABCDE) umfasst, wobei die Geradführungsrichtungen (V) der zumindest zwei Wattgestänge (ABCDE) übereinstimmen, wobei die Wattgestänge (ABCDE) voneinander entlang der gemeinsamen Geradführungsrichtung (V) beabstandet angeordnet sind, und wobei die Bewegungsebenen der zwei Wattgestänge (ABCDE) parallel zueinander verlaufen.

9. Aufhängungseinrichtung nach Anspruch 8,
**dadurch gekennzeichnet,**
**dass** die den Querschubstreben (9, 10) der beiden Wattgestängen (ABCDE) zugeordneten äußeren Anlenkpunke (A, E) jeweils paarweise auf einer den beiden Wattgestängen (ABCDE) gemeinsamen Schwenkachse (A, E) liegen.

10. Aufhängungseinrichtung nach Anspruch 9,
**dadurch gekennzeichnet,**
**dass** die Querschubstreben (9, 10) der beiden Wattgestänge (ABCDE) jeweils paarweise einstückig in Form einer im Wesentlichen V-förmigen Kombinationsstrebe (13, 14) ausgebildet sind.

11. Aufhängungseinrichtung einem der Ansprüche 1 bis 10,
**dadurch gekennzeichnet,**
**dass** zumindest einer der Anlenkpunkte (A, C, E) des zumindest einen Wattgestänges (ABCDE) relativbeweglich mit dem Massekörper (2) bzw. dem Unterbau (3) verbunden ist, wobei die Relativposition zwischen Anlenkpunkt (A, C, E) und Massekörper (2) bzw. Unterbau (3) mittels zumindest eines Aktuators (15) veränderbar ist.

12. Aufhängungseinrichtung nach Anspruch 11,
**dadurch gekennzeichnet,**
**dass** die Wirkungsrichtung eines Aktuators (15) im Wesentlichen senkrecht zur Geradführungsrichtung (V) des zumindest einen Wattgestänges (ABCDE) verläuft, wobei der Aktuator (15) mittels eines Hebelarms (8) an den Anlenkpunkt (A, C, E) des Wattgestänges angebunden ist.

13. Aufhängungseinrichtung Anspruch 11 oder 12,
**dadurch gekennzeichnet,**
**dass** der Anlenkpunkt (C) eines Aktuators (15) an der Wattgestängeanordnung (ABCDE) unmittelbar mit dem Drehpunkt (C) eines der Watt'schen Lenker (11) der Wattgestängeanordnung (ABCDE) verbunden ist, wobei die Wirkungsrichtung des Aktuators (15) im Wesentlichen senkrecht zur Geradführungsrichtung (V) der Wattgestängeanordnung (ABCDE) verläuft.

## Claims

1. Suspension device (1) for the resilient/damping suspension of a mass body (2), in particular a driver's cab (2) of a lorry, relative to a substructure (3), in particular relative to a vehicle chassis, the suspension device (1) having a spring/damper arrangement with at least one damper element and/or at least one spring element for damping impacts and vibrations, and also a Watt linkage arrangement (6, 7) with at least one Watt linkage (ABCDE) which connects the mass body (2) and the substructure (3) in manner movable relative to each other by means of a Watt rod (11) and is intended for reducing the degrees of freedom of movement of the mass body (2) in relation to the substructure (3), wherein the Watt rod (11) of the at least one Watt linkage (ABCDE) is mounted rotatably on a bearing receptacle (C) of the mass body (2) or of the substructure (3), **characterized in that** the at least one spring element (16) and/or the at least one damper element (12) of the spring/damper arrangement are/is arranged in the region of a Watt rod (11) between the Watt rod (11) and the bearing receptacle (C) assigned to the Watt rod (11).

2. Suspension device according to Claim 1, **characterized in that** the spring element and/or the damper element are/is designed as (a) rotation damper(s) (12) and/or as (a) rotation spring (s) (16).

3. Suspension device according to Claim 1 or 2, **characterized in that** the at least one damper device (12) of the spring/damper arrangement is arranged between a Watt rod (11) and the bearing receptacle (C) assigned to the Watt rod (11), whereas the at least one spring device (4, 5) of the spring/damper arrangement is arranged directly between the mass body (2) and the substructure (3).

4. Suspension device according to Claim 1 or 2, **characterized in that** the at least one spring device (16) of the spring/damper arrangement is arranged between a Watt rod (11) and the bearing receptacle (C) assigned to the Watt rod (11), whereas the at least one damper device of the spring/damper arrangement is arranged directly between the mass body (2) and the substructure (3).

5. Suspension device according to one of Claims 1 to 4, **characterized in that** the at least one spring device (16) and/or the at least one damper device (12) are/is arranged in a Watt rod.

6. Suspension device according to one of Claims 1 to 5, **characterized in that** both the at least one spring device (16) and the at least one damper device (12) of the spring/damper arrangement are arranged between a Watt rod (11) and the bearing receptacle (C) assigned to the Watt rod (11).

7. Suspension device according to one of Claims 1 to 6, **characterized in that** the Watt linkage arrangement comprises at least two Watt linkages (ABCDE), wherein the at least one spring device (16) is assigned to another Watt rod (11) of the Watt linkage arrangement as the at least one damper device (12).

8. Suspension device according to one of Claims 1 to 7, **characterized in that** the Watt linkage arrangement comprises two Watt linkages (ABCDE), wherein the straight-line motion directions (V) of the at least two Watt linkages (ABCDE) coincide, wherein the Watt linkages (ABCDE) are arranged spaced apart from one another along the common straight-line motion direction (V), and wherein the movement planes of the two Watt linkages (ABCDE) run parallel to each other.

9. Suspension device according to Claim 8, **characterized in that** the outer points of articulation (A, E) which are assigned to the transverse thrust struts (9, 10) of the two Watt linkages (ABCDE) lie in each case in pairs on a pivot axis (A, E) common to the two watt linkages (ABCDE).

10. Suspension device according to Claim 9, **characterized in that** the transverse thrust struts (9, 10) of the two Watt linkages (ABCDE) are formed integrally in each case in pairs in the form of a substantially V-shaped combination strut (13, 14).

11. Suspension device according to one of Claims 1 to 10, **characterized in that** at least one of the points of articulation (A, C, E) of the at least one Watt linkage (ABCDE) is connected to the mass body (2) or to the substructure (3) so as to be movable relative thereto, wherein the relative position between the point of articulation (A, C, E) and the mass body (2) or the substructure (3) is changeable by means of at least one actuator (15).

12. Suspension device according to Claim 11, **characterized in that** the direction of action of an actuator (15) runs substantially perpendicularly to the straight-line motion direction (V) of the at least one Watt linkage (ABCDE), wherein the actuator (15) is connected to the point of articulation (A, C, E) of the Watt linkage by means of a lever arm (8).

13. Suspension device according to Claim 11 or 12, **characterized in that** the point of articulation (C) of an actuator (15) on the Watt linkage arrangement (ABCDE) is directly connected to the pivot point (C) of one of the Watt rods (11) of the Watt linkage arrangement (ABCDE), wherein the direction of action of the actuator (15) runs substantially perpendicularly to the straight-line motion direction (V) of the Watt linkage arrangement (ABCDE).

## Revendications

1. Dispositif de suspension (1) pour la suspension à ressorts/amortissante d'un corps massique (2), en particulier d'une cabine de conducteur (2) d'un poids lourd, par rapport à une partie inférieure de carrosserie (3), en particulier par rapport à un châssis de véhicule, le dispositif de suspension (1) comprenant un ensemble ressort/amortisseur comportant au moins un élément amortisseur et/ou au moins un élément ressort pour l'amortissement de chocs ou de vibrations, ainsi qu'un ensemble de tringlerie de Watt (6, 7) comportant au moins une tringlerie de Watt (ABCDE) reliant le corps massique (2) et la partie inférieure de carrosserie (3) de manière déplaçable de façon relative au moyen d'un bras oscillant de Watt (11) pour la réduction des degrés de liberté de déplacement du corps massique (2) par rapport à la partie inférieure de carrosserie (3), le bras oscillant de Watt (11) de l'au moins une tringlerie de Watt (ABCDE) étant monté à rotation sur un logement de palier (C) du corps massique (2) ou de la partie inférieure de carrosserie (3),
**caractérisé en ce que**
l'au moins un élément ressort (16) et/ou l'au moins un élément amortisseur (12) de l'ensemble ressort/amortisseur est/sont disposé(s) dans la région d'un bras oscillant de Watt (11) entre le bras oscillant de Watt (11) et le logement de palier (C) associé au bras oscillant de Watt (11).

2. Dispositif de suspension selon la revendication 1,
**caractérisé en ce que**
l'élément ressort et/ou l'élément amortisseur est/sont réalisé(s) sous forme d'amortisseur de rotation (12) et/ou sous forme de ressort de rotation (16) .

3. Dispositif de suspension selon la revendication 1 ou 2,
**caractérisé en ce que**
l'au moins un dispositif amortisseur (12) de l'ensemble ressort/amortisseur est disposé entre un bras oscillant de Watt (11) et le logement de palier (C) associé au bras oscillant de Watt (11), tandis que l'au moins un dispositif ressort (4, 5) de l'ensemble ressort/amortisseur est disposé directement entre le corps massique (2) et la partie inférieure de carrosserie (3).

4. Dispositif de suspension selon la revendication 1 ou 2,
**caractérisé en ce que**
l'au moins un dispositif ressort (16) de l'ensemble ressort/amortisseur est disposé entre un bras oscillant de Watt (11) et le logement de palier (C) associé au bras oscillant de Watt (11), tandis que l'au moins un dispositif amortisseur de l'ensemble ressort/amortisseur est disposé directement entre le corps massique (2) et la partie inférieure de carrosserie (3).

5. Dispositif de suspension selon l'une quelconque des revendications 1 à 4,
**caractérisé en ce que**
l'au moins un dispositif ressort (16) et/ou l'au moins un dispositif amortisseur (12) sont disposés dans un bras oscillant de Watt.

6. Dispositif de suspension selon l'une quelconque des revendications 1 à 5,
**caractérisé en ce que**
non seulement l'au moins un dispositif ressort (16) mais encore l'au moins un dispositif amortisseur (12) de l'ensemble ressort/amortisseur sont disposés entre un bras oscillant de Watt (11) et le logement de palier (C) associé au bras oscillant de Watt (11).

7. Dispositif de suspension selon l'une quelconque des revendications 1 à 6,
**caractérisé en ce que**
l'ensemble de tringlerie de Watt comporte au moins deux tringleries de Watt (ABCDE), l'au moins un dispositif ressort (16) étant associé à un bras oscillant de Watt (11) de l'ensemble de tringlerie de Watt autre que celui auquel l'au moins un dispositif amortisseur (12) est associé.

8. Dispositif de suspension selon l'une quelconque des revendications 1 à 7,
**caractérisé en ce que**
l'ensemble de tringlerie de Watt comporte deux tringleries de Watt (ABCDE), les directions de guidage rectiligne (V) desdites au moins deux tringleries de Watt (ABCDE) coïncidant, les tringleries de Watt (ABCDE) étant disposées de manière espacée l'une de l'autre le long de la direction de guidage rectiligne commune (V), et les plans de déplacement des deux tringleries de Watt (ABCDE) s'étendant parallèlement l'un à l'autre.

9. Dispositif de suspension selon la revendication 8,
**caractérisé en ce que**
les points d'articulation (A, E) extérieurs associés aux biellettes de poussée transversales (9, 10) des deux tringleries de Watt (ABCDE) se situent respectivement par paires sur un axe de pivotement (A, E) commun aux deux tringleries de Watt (ABCDE).

10. Dispositif de suspension selon la revendication 9,
**caractérisé en ce que**
les biellettes de poussée transversales (9, 10) des deux tringleries de Watt (ABCDE) sont réalisées respectivement par paires d'un seul tenant sous forme de biellettes combinées (13, 14) essentiellement en forme de V.

11. Dispositif de suspension selon l'une quelconque des revendications 1 à 10,
**caractérisé en ce**
**qu'**au moins l'un des points d'articulation (A, C, E) de l'au moins une tringlerie de Watt (ABCDE) est relié au corps massique (2) ou à la partie inférieure de carrosserie (3) de manière déplaçable de façon relative, la position relative entre point d'articulation (A, C, E) et corps massique (2) ou partie inférieure de carrosserie (3) pouvant être modifiée au moyen d'au moins un actionneur (15).

12. Dispositif de suspension selon la revendication 11,
**caractérisé en ce que**
la direction d'action d'un actionneur (15) s'étend essentiellement perpendiculairement à la direction de guidage rectiligne (V) de l'au moins une tringlerie de Watt (ABCDE), l'actionneur (15) étant relié au point d'articulation (A, C, E) de la tringlerie de Watt au moyen d'un bras de levier (8).

13. Dispositif de suspension selon la revendication 11 ou 12,
**caractérisé en ce que**
le point d'articulation (C) d'un actionneur (15) sur l'ensemble de tringlerie de Watt (ABCDE) est relié directement au centre de rotation (C) de l'un des bras oscillants de Watt (11) de l'ensemble de tringlerie de Watt (ABCDE), la direction d'action de l'actionneur (15) s'étendant essentiellement perpendiculairement à la direction de guidage rectiligne (V) de l'ensemble de tringlerie de Watt (ABCDE).
